# FASCICULE DE BREVET EUROPEEN

(11) **EP 4 679 301 B1**
(45) Date de publication et mention de la délivrance du brevet: **26.08.2026**
(21) Numéro de dépôt: 25187724.7
(22) Date de dépôt: 07.07.2025
(51) Int. Cl.: H04L 67/12, H04W 4/70, G06F 21/60, G06F 21/62, H04L 9/40, H04W 12/10

(54) **PROCÉDÉ ET SYSTÈME DE COMMANDE SÉCURISÉE AUPRÈS D'UN COMPTEUR INTELLIGENT**
VERFAHREN UND SYSTEM ZUR SICHEREN STEUERUNG EINES INTELLIGENTEN ZÄHLERS
METHOD AND SYSTEM FOR SECURE CONTROL WITH A SMART METER

(30) Priorité: 08.07.2024 FR 2407438
(43) Date de publication de la demande: 14.01.2026
(73) Titulaire: SAGEMCOM ENERGY & TELECOM SAS, 92270 Bois-Colombes (FR)
(72) Inventeur: ROTER, Ziv, 92270 BOIS-COLOMBES (FR)
(74) Mandataire: Cabinet Le Guen Maillet

(56) Documents cités:
- WO-A1-2018/062613
- US-A1- 2023 064 062
- US-A1- 2023 379 169

## Description

### DOMAINE TECHNIQUE

Au moins un mode de réalisation concerne un procédé et un système de commande sécurisée auprès d'un compteur intelligent. Le système en question est adapté pour permettre à un dispositif gestionnaire d'assurer que des commandes transmises à un compteur intelligent ne soit pas manipulées en chemin et que des opérations réalisées par le compteur intelligent correspondent effectivement aux commandes transmises.

### ETAT DE LA TECHNIQUE ANTERIEURE

Il est connu des compteurs intelligents (« smart meters » en anglais), de type compteurs électriques (compteurs de consommations électriques) ou compteurs de fluides (compteurs de consommation de fluides), qui comprennent des interfaces de communication permettant à un système de gestion automatisée d'effectuer une collecte à distance de données de consommation. Par exemple, des compteurs électriques intelligents comportent une interface de communication de type Courants Porteurs en Ligne CPL (ou PLC, pour « Powerline Communications » en anglais). Des échanges peuvent ainsi être réalisés entre les compteurs intelligents et un système d'information IS (« Information System » en anglais) les gérant de manière centralisée. Cela permet au système d'information IS d'envoyer des commandes aux compteurs intelligents pour leur faire réaliser diverses opérations, comme des opérations de transmission de relevés de comptage, des opérations de changement de paramètres opérationnels (par exemple, un changement de seuil bas de surconsommation énergétique ou un changement de profil calendaire), des opérations de mise à jour logicielle, des opérations d'effacement de journaux d'événements, des opérations d'activation / désactivation de fonctionnalités (par exemple, coupure d'alimentation), etc.

Certaines de ces opérations sont considérées comme « critiques », puisqu'elles peuvent avoir des conséquences graves et non réversibles si elles sont déclenchées à tort. Or, des altérations de données pourraient survenir lors de l'acheminement des commandes depuis le système d'information IS jusqu'aux compteurs intelligents, soit par interférences soit par action malveillante.

De manière à se prémunir d'une altération d'attributs de commandes, les spécifications COSEM (« Companion Specification for Energy Metering » anglais) imposent que certaines commandes soient uniquement acceptées si elles utilisent un objet COSEM de protection de données (objet appelé *« DATA PROTECTION »,* comme par exemple repris dans l'ouvrage *« Bluebook DLMS »* V16 partie 2 §4.4.9) qui apposent une signature (chiffrement asymétrique) sur les attributs, et sur des métadonnées associées (numéro de transaction, date de la commande, identité cryptographique du signataire, identité cryptographique du destinataire). Pour rappel, les spécifications COSEM définissent un modèle sous forme d'objets pour formaliser des instructions (commandes) et plus généralement des échanges de données. Les objets sont combinables de manière à permettre de réaliser tout un panel d'opérations, qu'elles soient simples, telles que des lectures de registres, ou plus complexes, telles que des opérations de gestion de charge. Les spécifications COSEM sont suffisamment génériques pour permettre de modéliser divers cas d'utilisation au-delà de la gestion de l'énergie (gestion de la distribution d'eau, par exemple).

La protection des attributs, et des métadonnées associées, notamment permise par les spécifications COSEM grâce à l'objet de type *« DATA PROTECTION »* est un outil important de sécurisation des transmissions de commandes dans un système de gestion automatisée (à distance) de compteurs intelligents. Cela empêche que des opérations avec des attributs altérés ne soient malencontreusement réalisées.

Cependant, la sécurisation de la transmission de commandes par protection des attributs est une solution imparfaite. En effet, diverses commandes peuvent utiliser des attributs identiques ou compatibles. Et la protection des attributs offerte par l'objet de type *« DATA PROTECTION »* est sans effet contre une altération de la commande elle-même (on parle de « méthode invoquée » dans la terminologie des spécifications COSEM), typiquement une altération d'identifiant de commande.

Par exemple, considérons que la méthode *« remote_connect()* » d'un objet de classe *« DISCONNECTOR »* est invoquée en utilisant un objet de type « *DATA PROTECTION »* pour ordonner une activation d'alimentation. Seul le paramètre (attribut) de cette méthode (un entier valant « 0 ») est protégé par l'objet de type « *DATA PROTECTION ».* Si une altération en chemin change l'identifiant de la méthode invoquée en *« remote*_*disconnect()* », une opération totalement inverse de désactivation d'alimentation est réalisée. Le document US 2023/379169 divulgue la transmission des paquets sécurisés contenant des commandes et/ou des données à des dispositifs IoT (par exemple, des compteurs intelligents).

Il est alors souhaitable de fournir une solution qui permette de renforcer la sécurisation des commandes transmises dans un système de gestion automatisée à distance depuis un dispositif gestionnaire vers des compteurs intelligents, de sorte à assurer que le compteur intelligent réalise l'opération qui était effectivement souhaitée.

### EXPOSE DE L'INVENTION

A cet effet, il proposé un procédé de transmission d'une commande sécurisée dans un système de gestion automatisé de compteurs intelligents, la commande comportant un descripteur d'une opération à réaliser par un dit compteur intelligent et des attributs en entrée de l'opération à réaliser et des métadonnées associées à la commande, le procédé comportant les étapes suivantes exécutées par un dispositif gestionnaire du système de gestion automatisé gérant à distance les compteurs intelligents :
- réaliser une sécurisation qui génère une première signature sur un ensemble de données formé par les attributs en entrée de l'opération à réaliser et les métadonnées associées à la commande ;
- transmettre à destination du compteur intelligent en question la commande avec le descripteur de l'opération à réaliser, les attributs en entrée de l'opération à réaliser, les métadonnées associées à la commande et la première signature générée ;
- inclure dans les métadonnées associées à la commande une copie du descripteur de l'opération à réaliser, de sorte que la première signature s'applique aussi sur la copie du descripteur de l'opération à réaliser afin de permettre en réception de vérifier que la commande n'a pas été altérée pendant la transmission.

Ainsi, la sécurisation des commandes transmises dans un système de gestion automatisée à distance depuis un dispositif gestionnaire vers des compteurs intelligents est renforcée par la copie astucieuse du descripteur de l'opération à réaliser au sein de métadonnées qui bénéficient d'une protection par signature. Il est ainsi possible de vérifier en réception que l'opération à réaliser est bien celle initialement souhaitée (quand, en réception, la copie est conforme et que la signature est conforme).

Dans une réalisation particulière, le descripteur d'opération à réaliser et sa copie contiennent un identifiant de l'opération à réaliser.

Ainsi, bien qu'un simple identifiant d'opération à réaliser pourrait aisément subir une altération pouvant conduire à réaliser une autre opération que celle initialement souhaitée, la copie astucieuse du descripteur de l'opération à réaliser au sein de métadonnées qui bénéficient d'une protection par signature est suffisante pour permettre d'assurer que l'opération à réaliser est bien celle initialement souhaitée.

Dans une réalisation particulière, la gestion automatisée des compteurs intelligents est opérée selon une modélisation orientée objet, le descripteur d'opération à réaliser et sa copie contiennent un identifiant de classe d'au moins un objet manipulé pour réaliser l'opération en question.

Ainsi, bien qu'un simple identifiant de classes d'objets manipulés pour réaliser l'opération souhaitée pourrait aisément subir une altération pouvant conduire à réaliser une autre opération que celle initialement souhaitée, la copie astucieuse du descripteur de l'opération à réaliser au sein de métadonnées qui bénéficient d'une protection par signature est suffisante pour permettre d'assurer que l'opération à réaliser est bien celle initialement souhaitée.

Dans une réalisation particulière, la modélisation orientée objet est de type COSEM et la sécurisation qui génère la première signature est obtenue par un objet de type DATA PROTECTION.

Ainsi, la copie astucieuse du descripteur de l'opération à réaliser permet d'assurer la sécurisation recherchée alors que l'objet COSEM de type DATA PROTECTION n'est pas conçu pour protéger l'identification de l'opération à réaliser mais uniquement ses attributs et métadonnées associées.

Dans une réalisation particulière, le procédé comporte en outre les étapes suivantes, sur réception de la commande, de vérification de la commande exécutées par le compteur intelligent en question à destination duquel ladite commande a été transmise :
- récupérer, dans la commande reçue, le descripteur de l'opération à réaliser ;
- récupérer, dans la commande reçue, les attributs d'entrée à appliquer en entrée de l'opération à réaliser, ainsi que les métadonnées associées à la commande ;
- vérifier que la copie du descripteur de l'opération à réaliser dans les métadonnées récupérées est conforme au descripteur de l'opération à réaliser récupéré, et lorsque tel n'est pas le cas, rejeter la commande ;
- récupérer, dans la commande reçue, et vérifier que la première signature dans la commande est conforme avec les attributs d'entrée à appliquer en entrée de l'opération à réaliser et auxdites métadonnées y compris la copie du descripteur de l'opération à réaliser, qui ont été récupérés dans la commande, et lorsque tel n'est pas le cas, rejeter la commande, et sinon, accepter la commande.

Ainsi, le compteur intelligent en question à destination duquel ladite commande a été transmise est assuré que la commande n'a pas été altérée pendant la transmission.

Dans une réalisation particulière, la vérification de la commande est aussi exécutée par un concentrateur de données agissant comme relais entre le dispositif gestionnaire et le compteur intelligent en question dans le système de gestion automatisée.

Ainsi, il est vérifié que la commande n'a pas été altérée depuis le dispositif gestionnaire jusqu'au concentrateur de données, et si tel a été le cas, cette vérification évite de solliciter inutilement le compteur intelligent (et des ressources réseau entre le concentrateur de données et le compteur intelligent en question).

Dans une réalisation particulière, le procédé comporte en outre les étapes suivantes, après réalisation de l'opération commandée, exécutées par le compteur intelligent en question pour fournir une réponse à la commande :
- récupérer des attributs de sortie, et des métadonnées associées à la réponse, à fournir au dispositif gestionnaire en résultats d'exécution de la commande ;
- inclure, dans les métadonnées associées à la réponse, le descripteur d'opération à réaliser qui avait été fourni dans la commande ;
- réaliser une sécurisation qui génère une deuxième signature sur un ensemble de données formé par les attributs de sortie et les métadonnées associées à la réponse ;
- transmettre à destination du dispositif gestionnaire une réponse avec les attributs de sortie, lesdites métadonnées incluant le descripteur d'opération à réaliser qui avait été fourni dans la commande, et la deuxième signature générée.

Ainsi, la sécurisation est aussi renforcée pour la réponse apportée à la commande.

Dans une réalisation particulière, le procédé comporte en outre les étapes suivantes, sur réception de la réponse, de vérification de la réponse exécutées par le dispositif gestionnaire :
- récupérer, dans la réponse reçue, les attributs de sortie qui résultent de l'opération réalisée, ainsi que les métadonnées associées à la réponse ;
- récupérer en mémoire le descripteur d'opération à réaliser qui avait été initialement transmis dans la commande à laquelle la réponse est supposée correspondre ;
- vérifier que les métadonnées récupérées dans la réponse correspondent au descripteur d'opération à réaliser, et lorsque tel n'est pas le cas, rejeter la réponse ;
- récupérer, dans la réponse reçue, et vérifier que la deuxième signature est conforme avec les attributs de sortie et les métadonnées associées à la réponse, qui ont été récupérés dans la réponse, et lorsque tel n'est pas le cas, rejeter la réponse, et sinon, accepter la réponse.

Ainsi, le dispositif gestionnaire est assuré que la réponse à sa commande n'a pas été altérée pendant la transmission, et est particulièrement assuré que la réponse en question correspond bien à sa commande initiale.

Dans une réalisation particulière, la vérification de la réponse est aussi exécutée par un concentrateur de données agissant comme relais entre le dispositif gestionnaire et le compteur intelligent en question dans le système de gestion automatisée.

Ainsi, il est vérifié que la commande n'a pas été altérée depuis le compteur intelligent jusqu'au concentrateur de données, et si tel a été le cas, cette vérification évite de solliciter inutilement le dispositif gestionnaire (et des ressources réseau entre le concentrateur de données et le dispositive gestionnaire).

Il est également proposé ici un dispositif gestionnaire comportant de la circuiterie électronique configurée pour effectuer une transmission d'une commande sécurisée dans un système de gestion automatisé de compteurs intelligents où le dispositif gestionnaire est configuré pour gérer à distance les compteurs intelligents, la commande comportant un descripteur d'une opération à réaliser par un dit compteur intelligent et des attributs en entrée de l'opération à réaliser et des métadonnées associées à la commande, la circuiterie électronique étant configurée pour exécuter les étapes suivantes :
- réaliser une sécurisation qui génère une première signature sur un ensemble de données formé par les attributs en entrée de l'opération à réaliser et les métadonnées associées à la commande ;
- transmettre à destination du compteur intelligent en question la commande avec le descripteur de l'opération à réaliser, les attributs en entrée de l'opération à réaliser, les métadonnées associées à la commande et la première signature générée ;
- inclure dans les métadonnées associées à la commande une copie du descripteur de l'opération à réaliser, de sorte que la première signature s'applique aussi sur la copie du descripteur de l'opération à réaliser afin de permettre en réception de vérifier que la commande n'a pas été altérée pendant la transmission.

Il est également proposé ici un compteur intelligent configuré pour traiter une commande reçue d'un dispositif gestionnaire dans un système de gestion automatisé où le dispositif gestionnaire est configuré pour gérer à distance le compteur intelligent, la commande comportant un descripteur d'une opération à réaliser par ledit compteur intelligent et des attributs en entrée de l'opération à réaliser et des métadonnées associées à la commande. Le compteur intelligent comporte de la circuiterie électronique configurée pour exécuter les étapes suivantes, sur réception de la commande, de vérification de la commande :
- récupérer, dans la commande reçue, le descripteur de l'opération à réaliser ;
- récupérer, dans la commande reçue, les attributs d'entrée à appliquer en entrée de l'opération à réaliser, ainsi que les métadonnées associées à la commande ;
- vérifier que la copie du descripteur de l'opération à réaliser dans les métadonnées récupérées est conforme au descripteur de l'opération à réaliser récupéré, et lorsque tel n'est pas le cas, rejeter la commande ;
- récupérer, dans la commande reçue, et vérifier que la première signature dans la commande est conforme avec les attributs d'entrée à appliquer en entrée de l'opération à réaliser et auxdites métadonnées y compris la copie du descripteur de l'opération à réaliser, qui ont été récupérés dans la commande, et lorsque tel n'est pas le cas, rejeter la commande, et sinon, accepter la commande.

Il est également proposé ici un système de gestion automatisée de compteurs intelligents comportant un dispositif gestionnaire tel qu'exposé ci-dessus et des compteurs intelligents tels qu'exposé ci-dessus.

Il est également proposé ici un procédé implémenté par un compteur intelligent afin de traiter une commande reçue d'un dispositif gestionnaire dans un système de gestion automatisé où le dispositif gestionnaire est configuré pour gérer à distance le compteur intelligent, la commande comportant un descripteur d'une opération à réaliser par ledit compteur intelligent et des attributs en entrée de l'opération à réaliser et des métadonnées associées à la commande. Le procédé comporte les étapes suivantes, sur réception de la commande, de vérification de la commande :
- récupérer, dans la commande reçue, le descripteur de l'opération à réaliser ;
- récupérer, dans la commande reçue, les attributs d'entrée à appliquer en entrée de l'opération à réaliser, ainsi que les métadonnées associées à la commande ;
- vérifier que la copie du descripteur de l'opération à réaliser dans les métadonnées récupérées est conforme au descripteur de l'opération à réaliser récupéré, et lorsque tel n'est pas le cas, rejeter la commande ;
- récupérer, dans la commande reçue, et vérifier que la première signature dans la commande est conforme avec les attributs d'entrée à appliquer en entrée de l'opération à réaliser, et auxdites métadonnées y compris la copie du descripteur de l'opération à réaliser, qui ont été récupérés dans la commande, et lorsque tel n'est pas le cas, rejeter la commande, et sinon, accepter la commande.

Il est également proposé ici un produit programme d'ordinateur comportant des instructions entraînant l'implémentation par un processeur de l'un ou l'autre des procédés exposés ci-dessus, dans l'un quelconque de leurs modes de réalisation, lorsque les instructions sont exécutées par le processeur.

Il est également proposé ici un support de stockage d'informations stockant des instructions entraînant l'implémentation par un processeur de l'un ou l'autre des procédés exposés ci-dessus, dans l'un quelconque de leurs modes de réalisation, lorsque les instructions sont lues depuis le support de stockage d'informations et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée pour compteurs intelligents ;
[Fig. 2] montre une représentation logique d'interactions entre un dispositif gestionnaire et un compteur intelligent du système de gestion automatisée ;
[Fig. 3] illustre schématiquement un exemple d'architecture matérielle, qui est adapté pour implémenter un dispositif du système de gestion automatisée ;
[Fig. 4] illustre schématiquement un principe de génération et apposition de signature ;
[Fig. 5] illustre schématiquement un organigramme d'un procédé de formatage et de transmission d'une commande initiée par le dispositif gestionnaire et à destination du compteur intelligent ;
[Fig. 6] illustre schématiquement un organigramme d'un procédé de vérification pour acception ou rejet d'une commande reçue ;
[Fig. 7] illustre schématiquement un organigramme d'un procédé de formatage et de transmission d'une réponse à une commande qui a été initiée par le dispositif gestionnaire à destination du compteur intelligent, dans un mode de réalisation particulier ; et
[Fig. 8] illustre schématiquement un organigramme d'un procédé de vérification pour acception ou rejet de la réponse formattée conformément à la Fig. 7.

### EXPOSE DETAILLE DE MODES DE REALISATION

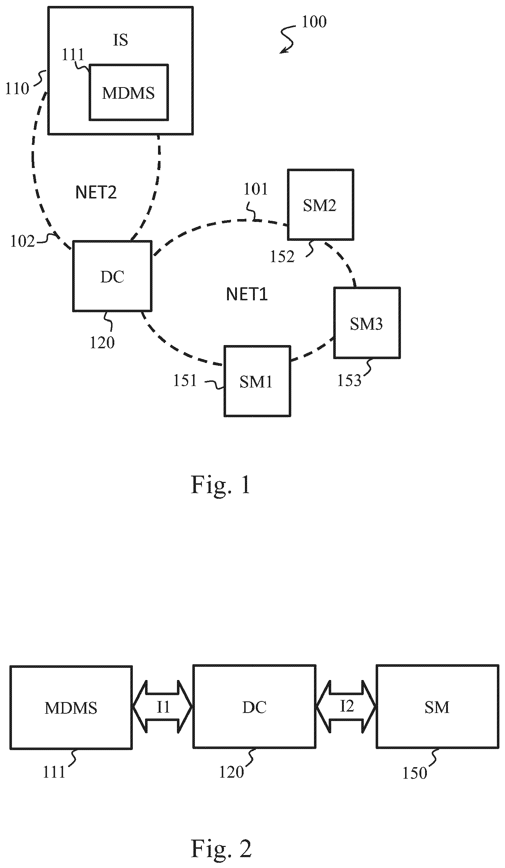

La **Fig. 1** illustre schématiquement un système de gestion automatisée 100 dans lequel la présente invention peut être implémentée. Le système de gestion automatisée 100 est configuré pour réaliser une gestion à distance de compteurs intelligents 151, 152, 153 (*e.g.,* électricité, eau, gaz, chaleur, autres fluides).

La gestion à distance des compteurs intelligents 151, 152, 153 est assurée par un dispositif gestionnaire 111 d'un système d'information IS (« Information System » en anglais) 110. Dans de nombreuses solutions de tels systèmes de gestion automatisée, le dispositif gestionnaire 111 est un système de gestion de données de compteurs MDMS (« Meter Data Management System » en anglais).

Le système d'information 110 inclut typiquement en outre un système de gestion de clefs KMS (« Key Management System » en anglais), qui est configuré pour stocker des clefs de chiffrement nécessaires aux compteurs intelligents qui dépendent du système d'information IS 110 en question. Le système de gestion de clefs KMS est configuré pour fournir au dispositif gestionnaire 111, tel que le système de gestion de données de compteurs MDMS, les clefs nécessaires aux chiffrements/déchiffrements devant être effectués vis-à-vis des compteurs intelligents 151, 152, 153. En variante, le dispositif gestionnaire 111 dispose, par configuration préalable, des clefs nécessaires aux chiffrements/déchiffrements devant être effectués vis-à-vis des compteurs intelligents 151, 152, 153.

Le dispositif gestionnaire 111 réalise la gestion des compteurs intelligents 151, 52, 153 à travers une infrastructure réseau gérée par un concentrateur de données DC (« Data Concentrateur » en anglais) 120. Le concentrateur de données DC 120 gère ainsi un premier réseau de communication NET1 101 via lequel les communications avec les compteurs intelligents 151, 152, 153 sont établies. Le concentrateur de données DC 120 sert ainsi de relais entre les compteurs intelligents 151, 152, 153 et le système d'information IS 110 (y compris le dispositif gestionnaire 111).

Comme schématiquement illustré sur la Fig. 1, le concentrateur de données DC 120 est externe au système d'information IS 110 et communique avec le système d'information IS, (y compris le dispositif gestionnaire 111) grâce à un deuxième réseau de communication NET2 102.

Typiquement, le système d'information IS 110 interagit avec plusieurs concentrateurs de données DC 120 au travers du deuxième réseau de communication NET2 102, chacun des concentrateurs de données DC 120 gérant les communications avec son propre groupe de compteurs intelligents.

Par exemple, le premier réseau de communication NET1 101 est un réseau de type courants porteurs en ligne PLC (« PowerLine Communications » en anglais), tel que conforme aux spécifications G3-PLC ou PRIME. Selon un autre exemple, le premier réseau de communication NET1 101 est un réseau sans-fil de type LPWAN (« Low-Power Wide Area network » en anglais) tel qu'on le trouve dans l'internet des objets IoT (« Internet of Things » en anglais).

Par exemple, le deuxième réseau de communication NET2 102 est un réseau de communication sans-fil de type 5G (5^{e} Génération). Selon d'autres exemples, le réseau de communication NET2 102 est un réseau de communication sans-fil de type GPRS (« General Packet Radio Service » en anglais), UMTS (« Universal Mobile Telecommunication System » en anglais) ou LTE (« Long-Term Evolution » en anglais).

D'autres technologies peuvent être utilisées pour réaliser le premier réseau de communication NET1 101 et le deuxième réseau de communication NET2 102.

Une représentation logique des interactions entre le dispositif gestionnaire 111, tel que le système MDMS, et un dit compteur intelligent 150 par l'intermédiaire du concentrateur de données DC 120, est montrée sur la **Fig. 2****.** Ces trois éléments peuvent être de fournisseurs (constructeurs) différents et sont typiquement localisés à des endroits différents.

Une interface I1 est définie pour les échanges entre le dispositif gestionnaire 111 et le concentrateur de données DC 120, et une interface I2 est définie pour le concentrateur de données DC 120 et le compteur intelligent 150.

Dans une implémentation DLMS (« Device Language Message Specifications » en anglais), le dispositif gestionnaire 111 a un rôle de dispositif tiers (ou tierce partie) au regard de la paire client DLMS - serveur DLMS formée par respectivement le concentrateur de données DC 120 et le compteur intelligent 150.

L'interface I1 permet alors à la tierce partie de donner des ordres au client DLMS et d'en récupérer les résultats. Ces ordres sont typiquement dans un format propriétaire (par exemple basé sur XML (« eXtensible Markup Language » en anglais), JSON (« JavaScript Object Notation » en anglais) ou autre) dans un protocole de transport applicatif sécurisé, type HTTPS (« Hypertext Transfer Protocol Secure » en anglais) mais manipule des commandes et des données métier au format COSEM / A-XDR (où A-XDR est un format d'encodage, référencé par les spécifications DLMS/COSEM, et défini dans la norme IEC 61334-6).

L'interface I2 permet au client DLMS de se connecter au compteur / serveur DLMS, d'envoyer des ordres et de récupérer les résultats en utilisant le protocole DLMS pour gérer les commandes et les données métier au format COSEM / A-XDR.

Le client DLMS assure les conversions de format de transport entre les premier NET1 101 et deuxième NET2 102 réseaux de communication. Notamment, une couche de sécurisation par chiffrement symétrique peut être ajoutée pour les transmissions sur le premier réseau de communication NET1 101.

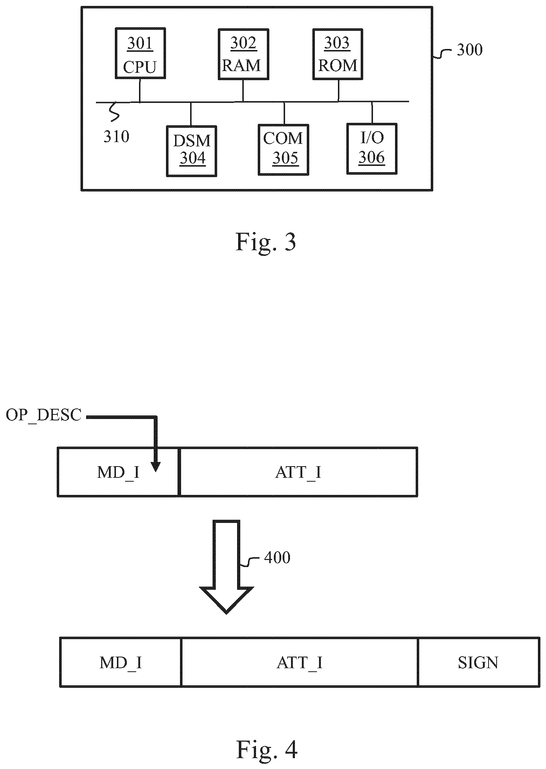

Pour assurer l'intégrité des commandes depuis le dispositif gestionnaire 111 jusqu'au compteur intelligent 150, une génération et apposition de signature est réalisée comme détaillé ci-après en relation avec la Fig. 4, par exemple par le biais d'un objet COSEM de type « *DATA PROTECTION ».*

La **Fig. 3** illustre schématiquement un exemple d'architecture matérielle 300, qui est adapté pour implémenter tout contrôleur de dispositif du système de gestion automatisée 100. L'exemple d'architecture matérielle est ainsi adapté pour implémenter un contrôleur du système d'information IS 110, ou de toute composante du système d'information IS 110. L'exemple d'architecture matérielle est aussi adapté pour implémenter un contrôleur du concentrateur de données DC 120. L'exemple d'architecture matérielle est aussi adapté pour implémenter un contrôleur de compteur intelligent 150, 151, 152, 153.

L'architecture matérielle 300 comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, ou EEPROM (« Electrically Erasable Programmable ROM » en anglais), ou une mémoire de type Flash ; un support de stockage de données DSM (« Data Storage Medium » en anglais) 304, tel qu'un disque dur HDD (« Hard Disk Drive » en anglais), ou un lecteur de support de stockage, tel qu'un lecteur de cartes SD (« Secure Digital » en anglais) ; et au moins une interface de communication COM 305. Selon le dispositif considéré, l'architecture matérielle 300 peut en outre comprendre des entrées/sorties (« Inputs / Outputs en anglais) I/O 306, par exemple pour effectuer des mesures de consommation (compteurs intelligents).

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'architecture matérielle 300 est mise sous tension, le processeur 301 est capable de lire de la RAM 302 des instructions et de les exécuter. Ces instructions forment un programme d'ordinateur causant la mise en œuvre, par le processeur 301, des étapes et algorithmes décrits ici en relation avec le dispositif concerné.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif du système de gestion automatisée 100 comprend de la circuiterie électronique agencée et configurée pour implémenter les étapes et algorithmes décrits ici en relation avec le dispositif en question.

La **Fig. 4** illustre schématiquement un principe de sécurisation de commande par génération et apposition de signature.

Comme proposé par les spécifications COSEM, une signature est apposée par chiffrement asymétrique grâce à une clef privée sur un ensemble de données formé des attributs d'entrée ATT_I à prendre en entrée d'une opération à réaliser, ainsi que de métadonnées MD_I associées à la commande.

Les commandes sécurisées conformément au principe de sécurisation de la Fig. 4 sont des commandes qui comportent des attributs d'entrée ATT_I (e.g., commandes de type « SET » pour mettre à jour des données (registre, table, paramètre...) du compteur intelligent ou « ACTION » pour faire exécuter une action par le compteur intelligent), donc pour lesquels un mécanisme de sécurisation par signature peut être appliqué conjointement avec des métadonnées associées à la commande.

Dans les spécifications COSEM, ces métadonnées sont un numéro de transaction (métadonnées *« transaction-id »*)*,* identité cryptographique du signataire (métadonnées *« originator-system-title* »), date de la commande (métadonnées *« date-time »*)*,* identité cryptographique du destinataire (métadonnées *« recipient-system-title* »). D'autres métadonnées peuvent être ajoutées (métadonnées « *other-information »* existantes ou dans un champ de métadonnées *« object-list »* ajouté à cet effet). Les métadonnées sont donc des données qui ne sont pas nécessaires pour réaliser l'opération elle-même, puisque les données nécessaires pour réaliser l'opération elle-même se trouvent ailleurs dans la commande, mais qui fournissent des informations complémentaires.

L'opération à réaliser est présentée dans un descripteur OP_DESC (e.g. objet(s) COSEM) qui n'est pas dans la zone de couverture de la signature dans la commande. Il est proposé ici d'inclure en outre dans les métadonnées MD_I (plus particulièrement dans les métadonnées « *other-information »* existantes ou via l'ajout d'un nouveau champ de métadonnées *« object-list »*) une copie de ce descripteur d'opération à réaliser OP_DESC.

Dans un mode de réalisation particulier, le descripteur d'opération à réaliser OP_DESC et sa copie contiennent un identifiant de l'opération à réaliser (par exemple, un numéro de méthode).

Dans un mode de réalisation particulier où la gestion automatisée des compteurs intelligents est opérée selon une modélisation orientée objet (comme dans les spécifications COSEM), le descripteur d'opération à réaliser OP_DESC et sa copie contiennent un identifiant de classe d'au moins un objet manipulé pour réaliser l'opération en question.

Par exemple, si l'opération à réaliser est une activation d'alimentation électrique pour un compteur intelligent électrique, un descripteur d'opération à réaliser OP_DESC convenable (et sa copie correspondante) contient le code OBIS (« Object Identification System » en anglais) et un numéro de méthode qui correspondent, de manière prédéfinie, à la méthode *« Disconnector.remote_connect()* » des spécifications DLMS/COSEM.

Dans un mode de réalisation particulier où la gestion automatisée des compteurs intelligents est opérée selon une modélisation orientée objet (comme dans les spécifications COSEM), le descripteur d'opération à réaliser OP_DESC est une liste d'objets COSEM représentant l'opération à réaliser.

Ainsi, après génération 400 d'une signature SIGN à partir des attributs d'entrée ATT_I en entrée de l'opération à réaliser et des métadonnées MD_I (y compris donc la copie du descripteur d'opération à réaliser OP_DESC), la signature SIGN est apposée en accompagnement des attributs d'entrée ATT_I en entrée de l'opération à réaliser et des métadonnées MD_I. Il est alors possible de vérifier en réception, grâce à la clef publique correspondant à la clef privée utilisée pour générer la signature, que non seulement les attributs d'entrée n'ont pas été altérés mais aussi, au-delà des autres métadonnées que celles de la copie descripteur d'opération à réaliser OP_DESC, que l'opération demandée est bien celle initialement requise par le dispositif gestionnaire 111.

Notamment, dans le cadre des spécifications DLMS/COSEM, le principe de sécurisation de commande présenté ci-dessus est avantageusement appliqué aux opérations suivantes (avec leurs numéros de classes correspondants dans les spécifications) :
- activation d'alimentation (ouverture de "breaker") via un objet de classe 70 *« DISCONNECT CONTROL » ;*
- configuration d'un seuil bas de détection de surconsommation via un objet de classe 71 *« LIMITER » ;*
- téléchargement et activation d'un logiciel applicatif via un objet de classe 18 *« IMAGE TRANSFER » ;*
- activation d'un calendrier tarifaire via un objet de classe 20 « ACTIVITY CALENDAR » ;
- effacement définitif de journaux d'événements (potentiellement traçant des événements de sécurité) via un objet de classe 7 *« PROFILE GENERIC ».*

Comme décrit plus loin, ce même principe est applicable pour la réponse transmise par le compteur électrique 150 en question avec des attributs de sortie ATT_O et des métadonnées MD_O associées à la réponse.

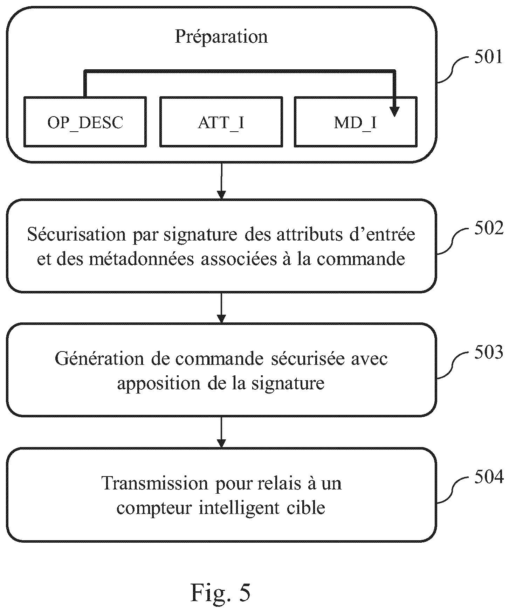

La **Fig. 5** illustre schématiquement un organigramme d'un procédé de formatage et de transmission d'une commande initiée par le dispositif gestionnaire 111 et à destination d'un dit compteur intelligent 150.

Dans une étape 501, le dispositif gestionnaire 111 prépare la commande. La commande correspond à une opération à réaliser par le compteur intelligent 150 en question (compteur intelligent cible). Le dispositif gestionnaire 111 génère un descripteur d'opération à réaliser OP_DESC comme évoqué ci-dessus en relation avec la Fig. 4.

Le dispositif gestionnaire 111 prépare les attributs d'entrée ATT_I à appliquer en entrée de l'opération à réaliser. Par exemple, l'opération à réaliser est une mise à jour d'un calendrier tarifaire et les attributs d'entrée ATT_I incluent un nouveau calendrier tarifaire à appliquer.

Le dispositif gestionnaire 111 prépare les métadonnées MD_I associées à la commande. Le dispositif gestionnaire 111 inclut, dans les métadonnées MD_I, une copie du descripteur d'opération à réaliser OP_DESC.

Dans une étape 502, le dispositif gestionnaire 111 sécurise les attributs d'entrée ATT_I et les métadonnées MD_I (y compris donc la copie du descripteur d'opération à réaliser OP_DESC) par génération de la signature comme déjà décrit (chiffrement asymétrique avec la clef privée du dispositif gestionnaire 111). Dans le cadre des spécifications COSEM, cette opération est réalisée grâce à un objet de type « *DATA PROTECTION ».*

Dans une étape 503, le dispositif gestionnaire 111 appose, à la commande, la signature générée. La commande reprend donc le descripteur de l'opération à réaliser, les attributs ATT_I , les métadonnées MD_I et la signature générée, afin de permettre en réception de vérifier que la commande n'a pas été altérée pendant la transmission.

Dans une étape 504, le dispositif gestionnaire 111 transmet la commande ainsi sécurisée au concentrateur de données DC 120 pour relais jusqu'au compteur intelligent 150 en question (compteur intelligent cible).

Préférentiellement, le dispositif gestionnaire 111 garde en mémoire le descripteur d'opération à réaliser OP_DESC tel qu'envoyé, jusqu'à ce qu'une réponse du compteur intelligent 150 en question lui parvienne (ou qu'un délai d'expiration supérieur à un seuil de durée prédéfinie soit atteint).

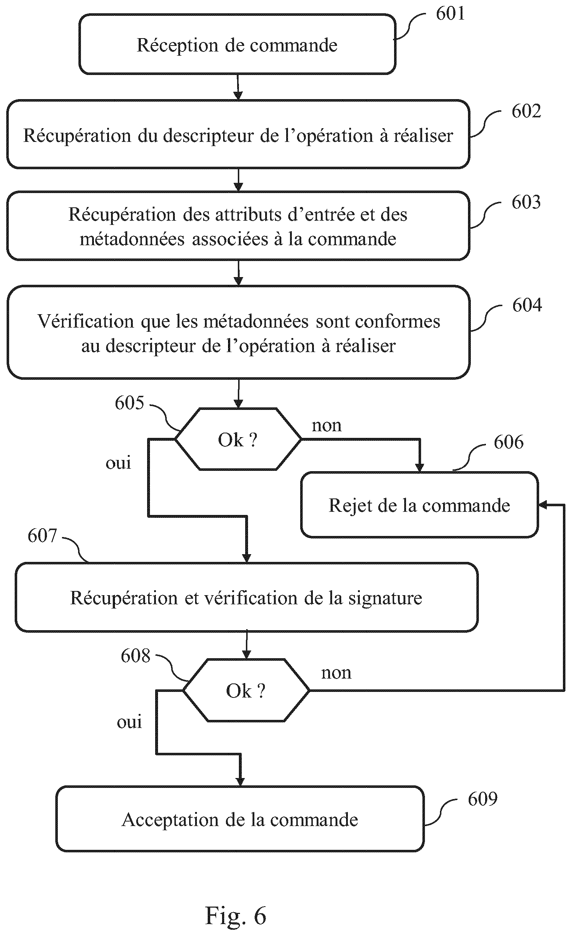

La **Fig. 6** illustre schématiquement un organigramme d'un procédé de vérification pour acception ou rejet d'une commande reçue. La commande a été générée et transmise selon le procédé décrit ci-dessus en relation avec la Fig. 5 à un dit compteur intelligent 150 (compteur intelligent cible).

Dans une étape 601, le compteur intelligent 150 en question reçoit la commande.

Dans une étape 602, le compteur intelligent 150 récupère, dans la commande reçue, (ce qui est supposé être) le descripteur de l'opération à réaliser OP_DESC (hors de la partie métadonnées MD_I de la commande).

Dans une étape 603, le compteur intelligent 150 récupère, dans la commande reçue, (ce qui est supposé être) les attributs d'entrée ATT_I à appliquer en entrée de l'opération à réaliser, ainsi que (ce qui est supposé être) les métadonnées MD_I associées à la commande.

Dans une étape 604, le compteur intelligent 150 vérifie que les métadonnées MD_I récupérées à l'étape 603 (c'est-à-dire celles qui sont supposées inclure la copie du descripteur de l'opération à réaliser OP_DESC) sont conformes au descripteur de l'opération à réaliser OP_DESC récupéré à l'étape 602. En d'autres termes, le compteur intelligent 150 vérifie que la copie l'opération à réaliser OP_DESC dans les métadonnées MD_I récupérées à l'étape 603 est identique au descripteur de l'opération à réaliser OP_DESC récupéré à l'étape 602. Cela permet de vérifier que le descripteur de l'opération à réaliser OP_DESC n'a pas été altéré (uniquement) à l'un des deux endroits où il est inscrit ou copié dans la commande.

Puis, dans une étape 605, le compteur intelligent 150 teste si la vérification de l'étape 604 est positive. Lorsque les métadonnées MD_I récupérées à l'étape 603 ne sont pas conformes au descripteur de l'opération à réaliser OP_DESC récupéré à l'étape 602, le compteur intelligent 150 rejette la commande dans une étape 606, ce qui met fin au procédé. Sinon, une étape 607 est effectuée.

Dans l'étape 607, le compteur intelligent 150 récupère, dans la commande reçue, et vérifie, grâce à la clef publique du dispositif gestionnaire 111, que la signature est conforme avec les attributs d'entrée ATT_I à appliquer en entrée de l'opération à réaliser et aux métadonnées MD_I associées à la commande, qui ont été récupérés à l'étape 602.

Puis, dans une étape 608, le compteur intelligent 150 teste si la vérification de l'étape 607 est positive. Lorsque la signature n'est pas conforme avec les attributs d'entrée ATT_I à appliquer en entrée de l'opération à réaliser et les métadonnées MD_I associées à la commande, l'étape 606 est effectuée. Sinon, une étape 609 est effectuée.

Dans l'étape 609, le compteur intelligent 150 accepte la commande, en constatant que celle-ci n'a pas été altérée pendant son acheminement depuis le dispositif gestionnaire 111.

Par exemple, considérons que la méthode *remote_connect()* d'un objet COSEM de classe *« DISCONNECTOR »* est invoquée en utilisant un objet de type « *DATA PROTECTION »* pour ordonner une activation d'alimentation (ACTION) auprès d'un dit compteur intelligent 150. Si une altération en chemin change l'identifiant de la méthode invoquée en *remote_disconnect0,* cette altération est détectée en réception et il est ainsi évité qu'une opération différente (ici inverse) de ce qui était initialement souhaité soit réalisée.

Selon un autre exemple, considérons le cas de la configuration d'un seuil bas de détection de surconsommation grâce à un objet de type *« LIMITER »* (classe 71). Si une altération en chemin change la commande « SET *threshold_normal » en «* SET *threshold_emergency »,* cette altération est détectée en réception et il est ainsi évité qu'une opération différente (ici configuration du seuil pour des situations opérationnelles différentes) de ce qui était initialement souhaité soit réalisée.

D'autres vérifications peuvent être réalisées par le compteur intelligent 150, notamment concernant les métadonnées MD_I. Par exemple, le compteur intelligent 150 peut vérifier que la date de la commande (métadonnées *« date-time »*) n'est pas trop ancienne par rapport à un seuil limite de temps écoulé. Aussi, le compteur intelligent 150 peut vérifier que l'identité cryptographique du signataire (métadonnées *« originator-system-title* ») et/ou identité cryptographique du destinataire (métadonnées *« recipient-system-title »*) sont conformes à des identités attendues.

Dans un mode de réalisation particulier, le procédé de la Fig. 6 est aussi implémenté par le concentrateur de données DC 120, dès lors que le concentrateur de données DC 120 a connaissance de la clef publique correspondant à la clef privée utilisée par le dispositif gestionnaire 111 pour générer la signature. Ainsi, si le concentrateur de données DC 120 est un dispositif de confiance, cela permet de vérifier, avant de relayer la commande au compteur intelligent 150 concerné, que la commande n'a pas été altérée sur l'interface I1 et de la rejeter sans la faire suivre audit compteur intelligent 150 le cas échéant.

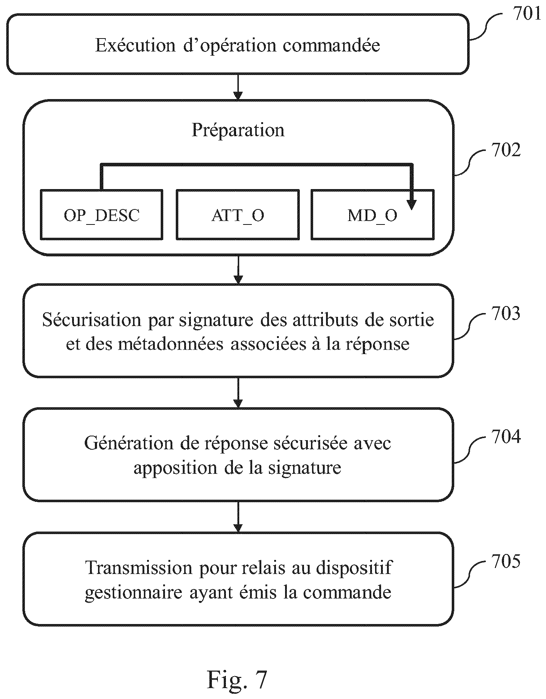

La **Fig. 7** illustre schématiquement un organigramme d'un procédé de formatage et de transmission d'une réponse à une commande qui a été initiée par le dispositif gestionnaire 111 à destination d'un dit compteur intelligent 150, dans un mode de réalisation particulier.

Dans une étape 701, le compteur intelligent 150 en question exécute l'opération commandée, après avoir exécuté le procédé de vérification de la Fig. 6.

Dans une étape 702, le compteur intelligent 150 prépare la réponse à la commande. Le compteur intelligent 150 reprend le descripteur d'opération à réaliser OP_DESC qui avait été fourni dans la commande. Le compteur intelligent 150 récupère des attributs de sortie ATT_O, et des métadonnées MD_O associées, à fournir au dispositif gestionnaire 111 en résultats d'exécution de la commande. Les attributs de sortie ATT_O incluent typiquement un code de succès ou un code d'erreur au regard des résultats d'exécution de la commande. Les attributs de sortie ATT_O peuvent inclure d'autres informations, comme par exemple une valeur de registre résultant de l'exécution de l'opération commandée.

Le compteur intelligent 150 inclut, dans les métadonnées MD_O, le descripteur d'opération à réaliser OP_DESC qui avait été fourni dans la commande. Cela permet au dispositif gestionnaire 111 d'avoir une confirmation que la vérification de la commande a bien été effectuée.

Préférentiellement, les métadonnées MD_O de la réponse incluent un numéro de transaction (métadonnées « *transaction-id* ») qui reprend un numéro de transaction qui avait été inclus dans les métadonnées MD_I de la commande correspondante, afin de permettre de déterminer à quelle commande la réponse correspond.

Dans une étape 703, le compteur intelligent 150 sécurise les attributs de sortie ATT_O et les métadonnées MD_O (y compris donc le descripteur d'opération à réaliser OP_DESC) par génération de la signature comme déjà décrit (chiffrement asymétrique avec la clef privé du compteur intelligent 150).

Dans une étape 704, le compteur intelligent 150 appose, à la réponse, la signature générée.

Dans une étape 705, le compteur intelligent 150 transmet la réponse ainsi sécurisée au concentrateur de données DC 120 pour relais jusqu'au dispositif gestionnaire 111.

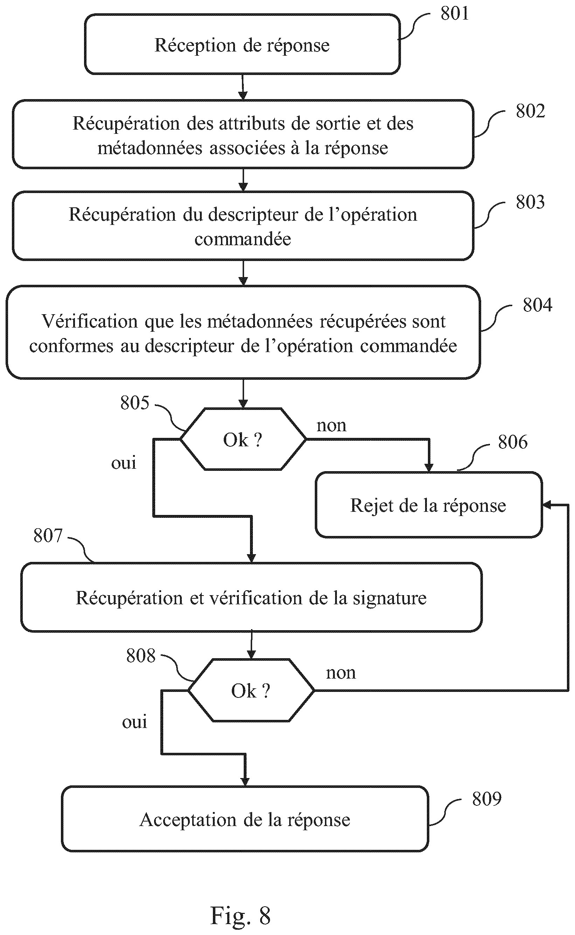

La **Fig. 8** illustre schématiquement un organigramme d'un procédé de vérification pour acception ou rejet d'une réponse reçue. La réponse a été générée et transmise selon le procédé décrit ci-dessus en relation avec la Fig. 7.

Dans une étape 801, le dispositif gestionnaire 111 reçoit la réponse en question.

Dans une étape 802, le dispositif gestionnaire 111 récupère, dans la réponse reçue, (ce qui est supposé être) les attributs de sortie ATT_O qui résultent de l'opération réalisée, ainsi que (ce qui est supposé être) les métadonnées MD_O associées à la réponse.

Dans une étape 803, le dispositif gestionnaire 111 récupère, en mémoire, le descripteur d'opération à réaliser OP_DESC qui avait été initialement transmis dans la commande à laquelle la réponse est supposée correspondre. Par exemple, les métadonnées MD_O de la réponse incluent un numéro de transaction qui est égal à un numéro de transaction qui avait été inclus dans les métadonnées MD_I de la commande correspondante, ce qui permet d'aisément retrouver quel est le descripteur OP_DESC en question.

Dans une étape 804, le dispositif gestionnaire 111 vérifie que les métadonnées MD_O récupérées à l'étape 802 correspondent au descripteur d'opération à réaliser OP_DESC récupéré à l'étape 803.

Puis, dans une étape 805, le dispositif gestionnaire 111 teste si la vérification de l'étape 804 est positive. Lorsque les métadonnées MD_O récupérées à l'étape 802 ne sont pas conformes au descripteur de l'opération à réaliser OP_DESC récupéré à l'étape 803, le dispositif gestionnaire 111 rejette la réponse dans une étape 806, ce qui met fin au procédé. Sinon, une étape 807 est effectuée.

Dans l'étape 807, le dispositif gestionnaire 111 récupère, dans la réponse reçue, et vérifie, grâce à la clef publique du compteur intelligent 150 ayant transmis la réponse, que la signature est conforme avec les attributs de sortie ATT_O et les métadonnées MD_O, qui ont été récupérés à l'étape 803.

Puis, dans une étape 808, le dispositif gestionnaire 111 teste si la vérification de l'étape 807 est positive. Lorsque la signature est conforme avec les attributs de sortie ATT_O et les métadonnées MD_O, une étape 809 est effectuée. Sinon, l'étape 806 est effectuée.

Dans l'étape 809, le dispositif gestionnaire 111 accepte la réponse, en constatant que celle-ci n'a pas été altérée pendant son acheminement depuis le compteur intelligent 150 l'ayant émise. Les attributs de sortie ATT_O peuvent alors être exploités par le dispositif gestionnaire 111 puisque l'opération réalisée par le compteur intelligent 150 correspond à la commande initiée par le dispositif gestionnaire 111.

D'autres vérifications peuvent être réalisées par le dispositif gestionnaire 111, notamment concernant les métadonnées MD_O. Par exemple, le dispositif gestionnaire 111 peut vérifier que la date de la réponse (métadonnées *« date-time* ») n'est pas trop ancienne par rapport à un seuil limite de temps écoulé. Aussi, le compteur intelligent 150 peut vérifier que l'identité cryptographique du signataire (métadonnées *« originator-system-title* ») et/ou identité cryptographique du destinataire (métadonnées *« recipient-system-title »*) sont conformes à des identités attendues.

Dans un mode de réalisation particulier, le procédé de la Fig. 8 est aussi implémenté par le concentrateur de données DC 120, dès lors que le concentrateur de données DC 120 a connaissance de la clef publique correspondant à la clef privée utilisée par le compteur intelligent 150 en question pour générer la signature. Ainsi, si le concentrateur de données DC 120 est un dispositif de confiance, cela permet de vérifier, avant de relayer la réponse au dispositif gestionnaire 111, que la réponse n'a pas été altérée sur l'interface I2 et de la rejeter sans la faire suivre au dispositif gestionnaire 111 le cas échéant.

## Revendications

1. Procédé de transmission d'une commande sécurisée dans un système (100) de gestion automatisé de compteurs intelligents (151, 152, 153), la commande comportant un descripteur (OP_DESC) d'une opération à réaliser par un dit compteur intelligent (151, 152, 153) et des attributs (ATT_I) en entrée de l'opération à réaliser et des métadonnées (MD_I) associées à la commande, le procédé comportant les étapes suivantes exécutées par un dispositif gestionnaire (111) du système (100) de gestion automatisé gérant à distance les compteurs intelligents (151, 152, 153) :
- réaliser une sécurisation (502) qui génère (400) une première signature sur un ensemble de données formé par les attributs (ATT_I) en entrée de l'opération à réaliser, et les métadonnées (MD_I) associées à la commande ;
- transmettre (504) à destination du compteur intelligent en question (151, 152, 153) la commande avec le descripteur de l'opération à réaliser (OP_DESC), les attributs (ATT_I) en entrée de l'opération à réaliser, les métadonnées (MD_I) associées à la commande et la première signature générée ;
**caractérisé en ce que** le procédé comporte en outre :
- inclure (501) dans les métadonnées (MD_I) associées à la commande une copie du descripteur (OP_DESC) de l'opération à réaliser, de sorte que la première signature s'applique aussi sur la copie du descripteur (OP-DESC) de l'opération à réaliser afin de permettre en réception de vérifier que la commande n'a pas été altérée pendant la transmission.

2. Procédé selon la revendication 1, dans lequel le descripteur (OP_DESC) d'opération à réaliser et sa copie contiennent un identifiant de l'opération à réaliser.

3. Procédé selon la revendication 1 ou 2, dans lequel la gestion automatisée des compteurs intelligents est opérée selon une modélisation orientée objet, le descripteur (OP_DESC) d'opération à réaliser et sa copie contiennent un identifiant de classe d'au moins un objet manipulé pour réaliser l'opération en question.

4. Procédé selon la revendication 3, dans lequel la modélisation orientée objet est de type COSEM et la sécurisation qui génère la première signature est obtenue par un objet de type DATA PROTECTION.

5. Procédé selon l'une quelconque des revendications 1 à 4, comportant en outre les étapes suivantes, sur réception (601) de la commande, de vérification de la commande exécutées par le compteur intelligent en question (151, 152, 153) à destination duquel ladite commande a été transmise :
- récupérer (602), dans la commande reçue, le descripteur (OP_DESC) de l'opération à réaliser ;
- récupérer (603), dans la commande reçue, les attributs (ATT_I) d'entrée à appliquer en entrée de l'opération à réaliser, ainsi que les métadonnées (MD_I) associées à la commande ;
- vérifier (604) que la copie du descripteur (OP_DESC) de l'opération à réaliser dans les métadonnées récupérées est conforme au descripteur (OP_DESC) de l'opération à réaliser récupéré, et lorsque tel n'est pas le cas, rejeter la commande ;
- récupérer (607), dans la commande reçue, et vérifier que la première signature dans la commande est conforme avec les attributs (ATT_I) d'entrée à appliquer en entrée de l'opération à réaliser, et auxdites métadonnées (MD_I) y compris la copie du descripteur (OP_DESC) de l'opération à réaliser, qui ont été récupérés dans la commande, et lorsque tel n'est pas le cas, rejeter la commande, et sinon, accepter la commande.

6. Procédé selon la revendication 5, dans lequel la vérification de la commande est aussi exécutée par un concentrateur de données (120) agissant comme relais entre le dispositif gestionnaire (111) et le compteur intelligent en question (151, 152, 153) dans le système (100) de gestion automatisée.

7. Procédé selon l'une quelconque des revendications 1 à 6, comportant en outre les étapes suivantes, après réalisation (701) de l'opération commandée, exécutées par le compteur intelligent en question (151, 152, 153) pour fournir une réponse à la commande :
- récupérer des attributs (ATT_O) de sortie, et des métadonnées (MD_O) associées à la réponse, à fournir au dispositif gestionnaire (111) en résultats d'exécution de la commande ;
- inclure (702), dans les métadonnées (MD_O) associées à la réponse, le descripteur (OP_DESC) d'opération à réaliser qui avait été fourni dans la commande ;
- réaliser (703) une sécurisation qui génère une deuxième signature sur un ensemble de données formé par les attributs (ATT_O) de sortie et les métadonnées (MD_O) associées à la réponse ;
- transmettre (705) à destination du dispositif gestionnaire (111) la réponse incluant les attributs (MD_O) de sortie, lesdites métadonnées (MD_O) incluant le descripteur d'opération à réaliser qui avait été fourni dans la commande, et la deuxième signature générée.

8. Procédé selon la revendication 7, comportant en outre les étapes suivantes, sur réception (801) de la réponse, de vérification de la réponse exécutées par le dispositif gestionnaire (111) :
- récupérer (802), dans la réponse reçue, les attributs (ATT_O) de sortie qui résultent de l'opération réalisée, ainsi que les métadonnées (MD_O) associées à la réponse ;
- récupérer (803) en mémoire le descripteur d'opération à réaliser qui avait été initialement transmis dans la commande à laquelle la réponse est supposée correspondre ;
- vérifier (804) que les métadonnées (MD_O) récupérées dans la réponse correspondent au descripteur (OP_DESC) d'opération à réaliser, et lorsque tel n'est pas le cas, rejeter la réponse ;
- récupérer (807), dans la réponse reçue, et vérifier que la deuxième signature est conforme avec les attributs (ATT_O) de sortie et les métadonnées (MD_O) associées à la réponse, qui ont été récupérés dans la réponse, et lorsque tel n'est pas le cas, rejeter la réponse, et sinon, accepter la réponse.

9. Procédé selon la revendication 8, dans lequel la vérification de la réponse est aussi exécutée par un concentrateur de données (120) agissant comme relais entre le dispositif gestionnaire (111) et le compteur intelligent en question (151, 152, 153) dans le système (100) de gestion automatisée.

10. Dispositif gestionnaire (111) comportant de la circuiterie électronique configurée pour effectuer une transmission d'une commande sécurisée dans un système (100) de gestion automatisé de compteurs intelligents (151, 152, 153) où le dispositif gestionnaire (111) est configuré pour gérer à distance les compteurs intelligents (151, 152, 153), la commande comportant un descripteur (OP_DESC) d'une opération à réaliser par un dit compteur intelligent (151, 152, 153) et des attributs (ATT_I) en entrée de l'opération à réaliser et des métadonnées (MD_I) associées à la commande, la circuiterie électronique étant configurée pour exécuter les étapes suivantes :
- réaliser une sécurisation (502) qui génère une première signature sur un ensemble de données formé par les attributs (ATT_I) en entrée de l'opération à réaliser et les métadonnées (MD_I) associées à la commande ;
- transmettre (504) à destination du compteur intelligent en question (151, 152, 153) la commande avec le descripteur (OP_DESC) de l'opération à réaliser, les attributs (ATT_I) en entrée de l'opération à réaliser, les métadonnées (MD_I) associées à la commande et la première signature générée ;
**caractérisé en ce que** le procédé comporte en outre :
- inclure (501) dans les métadonnées (MD_I) associées à la commande une copie du descripteur (OP_DESC) de l'opération à réaliser, de sorte que la première signature s'applique aussi sur la copie du descripteur (OP_DESC) de l'opération à réaliser afin de permettre en réception de vérifier que la commande n'a pas été altérée pendant la transmission.

11. Compteur intelligent (151, 152, 153) configuré pour traiter une commande reçue d'un dispositif gestionnaire (111) dans un système (100) de gestion automatisé où le dispositif gestionnaire (111) est configuré pour gérer à distance le compteur intelligent (151, 152, 153), la commande comportant un descripteur (OP_DESC) d'une opération à réaliser par le compteur intelligent et des attributs (ATT_I) en entrée de l'opération à réaliser et des métadonnées (MD_I) associées à la commande, **caractérisé en ce que** le compteur intelligent (151, 152, 153) comporte de la circuiterie électronique configurée pour exécuter les étapes suivantes, sur réception (601) de la commande, de vérification de la commande :
- récupérer (602), dans la commande reçue, le descripteur (OP_DESC) de l'opération à réaliser ;
- récupérer (603), dans la commande reçue, les attributs (ATT_I) d'entrée à appliquer en entrée de l'opération à réaliser, ainsi que les métadonnées (MD_I) associées ;
- vérifier (604) que la copie du descripteur (OP_DESC) de l'opération à réaliser dans les métadonnées récupérées est conforme au descripteur (OP_DESC) de l'opération à réaliser récupéré, et lorsque tel n'est pas le cas, rejeter la commande ;
- récupérer (607), dans la commande reçue, et vérifier que la première signature dans la commande est conforme avec les attributs (ATT_I) d'entrée à appliquer en entrée de l'opération à réaliser et auxdites métadonnées (MD_I) y compris la copie du descripteur (OP_DESC) de l'opération à réaliser, qui ont été récupérés dans la commande, et lorsque tel n'est pas le cas, rejeter la commande, et sinon, accepter la commande.

12. Système (100) de gestion automatisée de compteurs intelligents comportant un dispositif gestionnaire (111) selon la revendication 10 et des compteurs intelligents (151, 152, 153) selon la revendication 11.

13. Procédé implémenté par un compteur intelligent (151, 152, 153) afin de traiter une commande reçue d'un dispositif gestionnaire (111) dans un système (100) de gestion automatisé où le dispositif gestionnaire (111) est configuré pour gérer à distance le compteur intelligent (151, 152, 153), la commande comportant un descripteur d'une opération à réaliser par ledit compteur intelligent (151, 152, 153) et des attributs (ATT_I) en entrée de l'opération à réaliser et des métadonnées (MD_I) associées à la commande, **caractérisé en ce que** le procédé comporte les étapes suivantes, sur réception (601) de la commande, de vérification de la commande :
- récupérer (602), dans la commande reçue, le descripteur (OP_DESC) de l'opération à réaliser ;
- récupérer (603), dans la commande reçue, les attributs (ATT_I) d'entrée à appliquer en entrée de l'opération à réaliser, ainsi que les métadonnées (MD_I) associées à la commande ;
- vérifier (604) que la copie du descripteur (OP_DESC) de l'opération à réaliser dans les métadonnées (MD_I) récupérées est conforme au descripteur (OP_DESC) de l'opération à réaliser récupéré, et lorsque tel n'est pas le cas, rejeter la commande ;
- récupérer (607), dans la commande reçue, et vérifier que la première signature dans la commande est conforme avec les attributs (ATT_I) d'entrée à appliquer en entrée de l'opération à réaliser et auxdites métadonnées (MD_I) y compris la copie du descripteur (OP_DESC) de l'opération à réaliser, qui ont été récupérés dans la commande, et lorsque tel n'est pas le cas, rejeter la commande, et sinon, accepter la commande.

14. Produit programme d'ordinateur comportant des instructions entraînant une implémentation, par un processeur, du procédé selon l'une quelconque des revendications 1 à 4 ou du procédé selon la revendication 13, lorsque les instructions sont exécutées par le processeur.

15. Support de stockage d'informations stockant des instructions entraînant une implémentation, par un processeur, du procédé selon l'une quelconque des revendications 1 à 4 ou du procédé selon la revendication 13, lorsque les instructions sont lues depuis le support de stockage d'informations et exécutées par le processeur.

## Patentansprüche

1. Verfahren zur Übertragung eines sicheren Befehls in einem automatisierten Verwaltungssystems (100) für intelligente Zähler (151, 152, 153), wobei der Befehl einen Deskriptor (OP_DESC) einer Operation, die von einem der intelligenten Zähler (151, 152, 153) durchzuführen ist, und Attribute (ATT_I) als Eingabe der durchzuführenden Operation und Metadaten (MD_I), die dem Befehl zugeordnet sind, beinhaltet, wobei das Verfahren die folgenden Schritte beinhaltet, die von einer Verwaltungsvorrichtung (111) des automatisierten Verwaltungssystems (100), die die intelligenten Zähler (151, 152, 153) fernverwaltet, ausgeführt werden:
- Durchführen einer Sicherung (502), die eine erste Signatur an einem Datensatz erzeugt (400), der von den Attributen (ATT_I) als Eingabe der durchzuführenden Operation und den Metadaten (MD_I), die dem Befehl zugeordnet sind, gebildet wird;
- Übertragen (504) des Befehls mit dem Deskriptor der durchzuführenden Operation (OP_DESC), den Attributen (ATT_I) als Eingabe der durchzuführenden Operation, den Metadaten (MD_I), die dem Befehl zugeordnet sind, und der erzeugten ersten Signatur, an den betreffenden intelligenten Zähler (151, 152, 153);
**dadurch gekennzeichnet, dass** das Verfahren ferner Folgendes umfasst:
- Aufnehmen (501), in die Metadaten (MD_I), die dem Befehl zugeordnet sind, einer Kopie des Deskriptors (OP_DESC) der durchzuführenden Operation, so dass die erste Signatur auch für die Kopie des Deskriptors (OP-DESC) der durchzuführenden Operation gilt, um beim Empfang überprüfen zu können, dass der Befehl während der Übertragung nicht verändert worden ist.

2. Verfahren nach Anspruch 1, wobei der Deskriptor (OP_DESC) der durchzuführenden Operation und seine Kopie eine Kennung der durchzuführenden Operation enthalten.

3. Verfahren nach Anspruch 1 oder 2, wobei die automatisierte Verwaltung der intelligenten Zähler gemäß einer objektorientierten Modellierung durchgeführt wird, wobei der Deskriptor (OP_DESC) der durchzuführenden Operation und seine Kopie eine Klassenkennung für wenigstens ein Objekt enthalten, das zur Durchführung der betreffenden Operation behandelt wird.

4. Verfahren nach Anspruch 3, wobei die objektorientierte Modellierung vom Typ COSEM ist und die Sicherung, die die erste Signatur erzeugt, durch ein Objekt vom Typ DATA PROTECTION erhalten wird.

5. Verfahren nach einem der Ansprüche 1 bis 4, das ferner die folgenden Schritte des Überprüfens des Befehls bei Empfang (601) des Befehls beinhaltet, die von dem betreffenden intelligenten Zähler (151, 152, 153), an welchen der Befehl übertragen wurde, ausgeführt werden:
- Abrufen (602), aus dem empfangenen Befehl, des Deskriptors (OP_DESC) der durchzuführenden Operation;
- Abrufen (603), aus dem empfangenen Befehl, der Eingabeattribute (ATT_I), die als Eingabe der durchzuführenden Operation anzuwenden sind, sowie der Metadaten (MD_I), die dem Befehl zugeordnet sind;
- Überprüfen (604), dass die Kopie des Deskriptors (OP_DESC) der durchzuführenden Operation in den abgerufenen Metadaten dem abgerufenen Deskriptor (OP_DESC) der durchzuführenden Operation entspricht, und wenn dies nicht der Fall ist, Zurückweisen des Befehls;
- Abrufen (607), aus dem empfangenen Befehl, und überprüfen, dass die erste Signatur in dem Befehl den Eingabeattributen (ATT_I), die als Eingabe der durchzuführenden Operation anzuwenden sind, und den Metadaten (MD_I) entspricht, einschließlich der Kopie des Deskriptors (OP_DESC) der durchzuführenden Operation, die aus dem Befehl abgerufen worden sind, und wenn dies nicht der Fall ist, Zurückweisen des Befehls, und anderenfalls Akzeptieren des Befehls.

6. Verfahren nach Anspruch 5, wobei das Überprüfen des Befehls auch von einem Datenkonzentrator (120) ausgeführt wird, der als Relais zwischen der Verwaltungsvorrichtung (111) und dem betreffenden intelligenten Zähler (151, 152, 153) in dem automatisierten Verwaltungssystem (100) fungiert.

7. Verfahren nach einem der Ansprüche 1 bis 6, das ferner die folgenden Schritte nach Durchführung (701) der angeforderten Operation beinhaltet, die von dem betreffenden intelligenten Zähler (151, 152, 153) ausgeführt werden, um eine Antwort auf den Befehl bereitzustellen:
- Abrufen von Ausgabeattributen (ATT_O) und Metadaten (MD_O), die der Antwort zugeordnet sind, die der Verwaltungsvorrichtung (111) als Ausführungsergebnisse des Befehls bereitzustellen sind;
- Aufnehmen (702), in die Metadaten (MD_O), die der Antwort zugeordnet sind, des Deskriptors (OP_DESC) der durchzuführenden Operation, der in dem Befehl bereitgestellt worden war;
- Durchführen (703) einer Sicherung, die eine zweite Signatur an einem Datensatz erzeugt, der von den Ausgabeattributen (ATT_O) und den Metadaten (MD_O), die der Antwort zugeordnet sind, gebildet wird;
- Übertragen (705) der Antwort mit den Ausgabeattributen (ATT_O) an die Verwaltungsvorrichtung (111), wobei die Metadaten (MD_O) den Deskriptor der durchzuführenden Operation, der in dem Befehl bereitgestellt worden war, und die erzeugte zweite Signatur beinhalten.

8. Verfahren nach Anspruch 7, das ferner die folgenden Schritte des Überprüfens der Antwort bei Empfang (801) der Antwort beinhaltet, die von der Verwaltungsvorrichtung (111) ausgeführt werden:
- Abrufen (802), aus der empfangenen Antwort, der Ausgabeattribute (ATT_O), die aus der durchgeführten Operation hervorgehen, sowie der Metadaten (MD_O), die der Antwort zugeordnet sind;
- Abrufen (803), im Speicher, des Deskriptors der durchzuführenden Operation, der anfangs in dem Befehl übertragen worden war, dem die Antwort entsprechen soll;
- Überprüfen (804), dass die aus der Antwort abgerufenen Metadaten (MD_O) dem Deskriptor (OP_DESC) der durchzuführenden Operation entsprechen, und wenn dies nicht der Fall ist, Zurückweisen der Antwort;
- Abrufen (807), aus der empfangenen Antwort, und Überprüfen, dass die zweite Signatur den Ausgabeattributen (ATT_O) und den Metadaten (MD_O), die der Antwort zugeordnet sind, die aus der Antwort abgerufen worden sind, entsprechen, und wenn dies nicht der Fall ist, Zurückweisen der Antwort, und anderenfalls Akzeptieren der Antwort.

9. Verfahren nach Anspruch 8, wobei das Überprüfen der Antwort auch von einem Datenkonzentrator (120) ausgeführt wird, der als Relais zwischen der Verwaltungsvorrichtung (111) und dem betreffenden intelligenten Zähler (151, 152, 153) in dem automatisierten Verwaltungssystem (100) fungiert.

10. Verwaltungsvorrichtung (111), die eine elektronische Schaltung beinhaltet, die dazu ausgebildet ist, eine Übertragung eines sicheren Befehls in einem automatisierten Verwaltungssystem (100) für intelligente Zähler (151, 152, 153) durchzuführen, wobei die Verwaltungsvorrichtung (111) dazu ausgebildet ist, die intelligenten Zähler (151, 152, 153) fernzuverwalten, wobei der Befehl einen Deskriptor (OP_DESC) einer Operation, die von einem der intelligenten Zähler (151, 152, 153) durchzuführen ist, und Attribute (ATT_I) als Eingabe der durchzuführenden Operation und Metadaten (MD_I), die dem Befehl zugeordnet sind, beinhaltet, wobei die elektronische Schaltung dazu ausgebildet ist, die folgenden Schritte auszuführen:
- Durchführen einer Sicherung (502), die eine erste Signatur an einem Datensatz erzeugt, der von den Attributen (ATT_I) als Eingabe der durchzuführenden Operation und den Metadaten (MD_I), die dem Befehl zugeordnet sind, gebildet wird;
- Übertragen (504) des Befehls mit dem Deskriptor (OP_DESC) der durchzuführenden Operation, den Attributen (ATT_I) als Eingabe der durchzuführenden Operation, den Metadaten (MD_I), die dem Befehl zugeordnet sind, und der erzeugten ersten Signatur, an den betreffenden intelligenten Zähler (151, 152, 153);
**dadurch gekennzeichnet, dass** das Verfahren ferner Folgendes umfasst:
- Aufnehmen (501), in die Metadaten (MD_I), die dem Befehl zugeordnet sind, einer Kopie des Deskriptors (OP_DESC) der durchzuführenden Operation, so dass die erste Signatur auch für die Kopie des Deskriptors (OP_DESC) der durchzuführenden Operation gilt, um beim Empfang überprüfen zu können, dass der Befehl während der Übertragung nicht verändert worden ist.

11. Intelligenter Zähler (151, 152, 153), der dazu ausgebildet ist, einen Befehl zu verarbeiten, der von einer Verwaltungsvorrichtung (111) in einem automatisierten Verwaltungssystem (100) empfangen wurde, wobei die Verwaltungsvorrichtung (111) dazu ausgebildet ist, den intelligenten Zähler (151, 152, 153) fernzuverwalten, wobei der Befehl einen Deskriptor (OP_DESC) einer Operation, die von dem intelligenten Zähler durchzuführen ist, und Attribute (ATT_I) als Eingabe der durchzuführenden Operation und Metadaten (MD_I), die dem Befehl zugeordnet sind, beinhaltet, **dadurch gekennzeichnet, dass** der intelligente Zähler (151, 152, 153) die elektronische Schaltung beinhaltet, die dazu ausgebildet ist, bei Empfang (601) des Befehls die folgenden Schritte des Überprüfens des Befehls auszuführen:
- Abrufen (602), aus dem empfangenen Befehl, des Deskriptors (OP_DESC) der durchzuführenden Operation;
- Abrufen (603), aus dem empfangenen Befehl, der Eingabeattribute (ATT_I), die als Eingabe der durchzuführenden Operation anzuwenden sind, sowie der zugeordneten Metadaten (MD_I);
- Überprüfen (604), dass die Kopie des Deskriptors (OP_DESC) der durchzuführenden Operation in den abgerufenen Metadaten dem abgerufenen Deskriptor (OP_DESC) der durchzuführenden Operation entspricht, und wenn dies nicht der Fall ist, Zurückweisen des Befehls;
- Abrufen (607), aus dem empfangenen Befehl, und Überprüfen, dass die erste Signatur in dem Befehl den Eingabeattributen (ATT_I), die als Eingabe der durchzuführenden Operation anzuwenden sind, und den Metadaten (MD_I) entspricht, einschließlich der Kopie des Deskriptors (OP_DESC) der durchzuführenden Operation, die aus dem Befehl abgerufen worden sind, und wenn dies nicht der Fall ist, Zurückweisen des Befehls, und anderenfalls Akzeptieren des Befehls.

12. Automatisiertes Verwaltungssystem (100) für intelligente Zähler, das eine Verwaltungsvorrichtung (111) nach Anspruch 10 und intelligente Zähler (151, 152, 153) nach Anspruch 11 beinhaltet.

13. Verfahren, das von einem intelligenten Zähler (151, 152, 153) implementiert wird, um einen Befehl zu verarbeiten, der von einer Verwaltungsvorrichtung (111) in einem automatisierten Verwaltungssystem (100) empfangen wurde, wobei die Verwaltungsvorrichtung (111) dazu ausgebildet ist, den intelligenten Zähler (151, 152, 153) fernzuverwalten, wobei der Befehl einen Deskriptor (OP_DESC) einer Operation, die von dem intelligenten Zähler (151, 152, 153) durchzuführen ist, und Attribute (ATT_I) als Eingabe der durchzuführenden Operation und Metadaten (MD_I), die dem Befehl zugeordnet sind, beinhaltet, **dadurch gekennzeichnet, dass** das Verfahren die folgenden Schritte des Überprüfens des Befehls bei Empfang (601) des Befehls beinhaltet:
- Abrufen (602), aus dem empfangenen Befehl, des Deskriptors (OP_DESC) der durchzuführenden Operation;
- Abrufen (603), aus dem empfangenen Befehl, der Eingabeattribute (ATT_I), die als Eingabe der durchzuführenden Operation anzuwenden sind, sowie der Metadaten (MD_I), die dem Befehl zugeordnet sind;
- Überprüfen (604), dass die Kopie des Deskriptors (OP_DESC) der durchzuführenden Operation in den abgerufenen Metadaten (MD_I) dem abgerufenen Deskriptor (OP_DESC) der durchzuführenden Operation entspricht, und wenn dies nicht der Fall ist, Zurückweisen des Befehls;
- Abrufen (607), aus dem empfangenen Befehl, und Überprüfen, dass die erste Signatur in dem Befehl den Eingabeattributen (ATT_I), die als Eingabe der durchzuführenden Operation anzuwenden sind, und den Metadaten (MD_I) entspricht, einschließlich der Kopie des Deskriptors (OP_DESC) der durchzuführenden Operation, die aus dem Befehl abgerufen worden sind, und wenn dies nicht der Fall ist, Zurückweisen des Befehls, und anderenfalls Akzeptieren des Befehls.

14. Computerprogrammprodukt, das Anweisungen beinhaltet, die eine Implementierung des Verfahrens nach einem der Ansprüche 1 bis 4 oder des Verfahrens nach Anspruch 13 durch einen Prozessor veranlassen, wenn die Anweisungen vom Prozessor ausgeführt werden.

15. Informationsspeichermedium, das Anweisungen speichert, die eine Implementierung des Verfahrens nach einem der Ansprüche 1 bis 4 oder des Verfahrens nach Anspruch 13 durch einen Prozessor veranlassen, wenn die Anweisungen aus dem Informationsspeichermedium gelesen und vom Prozessor ausgeführt werden.

## Claims

1. Method for transmitting a secure command in a system (100) for automated management of smart meters (151, 152, 153), the command comprising a descriptor (OP_DESC) of an operation to be performed by a said smart meter (151, 152, 153) and input attributes (ATT_I) of the operation to be performed and metadata (MD_I) associated with the command, the method comprising the following steps performed by a management device (111) of the automated management system (100) remotely managing the smart meters (151, 152, 153):
- implementing a protection (502) that generates (400) a first signature on a set of data formed by the input attributes (ATT_I) of the operation to be performed and the metadata (MD_I) associated with the command;
- transmitting (504), to the smart meter (151, 152, 153) in question, the command with the descriptor of the operation to be performed (OP_DESC), the input attributes (ATT_I) of the operation to be performed, the metadata (MD_I) associated with the command and the first signature generated;
**characterised in that** the method furthermore comprises:
- including (501), in the metadata (MD_I) associated with the command, a copy of the descriptor (OP_DESC) of the operation to be performed, so that the first signature also applies to the copy of the descriptor (OP_DESC) of the operation to be performed in order to make it possible, on reception, to verify that the command has not been altered during transmission.

2. Method according to claim 1, wherein the descriptor (OP_DESC) of the operation to be performed and the copy thereof contain an identifier of the operation to be performed.

3. Method according to claim 1 or 2, wherein the automated management of smart meters is implemented in accordance with an object-oriented modelling, the descriptor (OP_DESC) of the operation to be performed and the copy thereof contain a class identifier of at least one object manipulated to perform the operation in question.

4. Method according to claim 3, wherein the object-oriented modelling is of the COSEM type and the protection that generates the first signature is obtained by an object of the DATA PROTECTION type.

5. Method according to any one of claims 1 to 4, furthermore comprising the following steps, on reception (601) of the command, of verifying the command, performed by the smart meter in question (151, 152, 153) to which said command was transmitted:
- recovering (602), in the command received, the descriptor (OP_DESC) of the operation to be performed;
- recovering (603), in the command received, the input attributes (ATT_I) to be applied as an input of the operation to be performed, as well as the metadata (MD_I) associated with the command;
- verifying (604) that the copy of the descriptor (OP_DESC) of the operation to be performed in the metadata recovered conforms to the descriptor (OP_DESC) of the operation to be performed recovered and, when such is not the case, rejecting the command;
- recovering (607), in the command received, and verifying that the first signature in the command conforms to the input attributes (ATT_I) to be applied as an input to the operation to be performed and to said metadata (MD_I), including the copy of the descriptor (OP_DESC) of the operation to be performed, which were recovered in the command, and, when such is not the case, rejecting the command, and otherwise accepting the command.

6. Method according to claim 5, wherein the verification of the command is also implemented by a data concentrator (120) acting as a relay between the management device (111) and the smart meter in question (151, 152, 153) in the automated management system (100).

7. Method according to any one of claims 1 to 6, furthermore comprising the following steps, after the operation demanded has been performed (701), performed by the smart meter in question (151, 152, 153) to provide a response to the command:
- recovering output attributes (ATT_O), and metadata (MD_O) associated with the response, to be supplied to the management device (111) as results of the implementation of the command;
- including (702), in the metadata (MD_O) associated with the response, the descriptor (OP_DESC) of the operation to be performed that had been supplied in the command;
- implementing (703) a protection that generates a second signature on a set of data formed by the output attributes (ATT_O) and the metadata (MD_O) associated with the response;
- transmitting (705), to the management device (111), a response including the output attributes (MD_O), said metadata (MD_O) including the descriptor of the operation to be performed that had been supplied in the command, and the second signature generated.

8. Method according to claim 7, furthermore comprising the following steps, on reception (801) of the response, of verifying the response, performed by the management device (111):
- recovering (802), in the response received, the output attributes (ATT_O) that result from the operation performed, as well as the metadata (MD_O) associated with the response;
- recovering (803) in memory the descriptor of the operation to be performed that had initially been transmitted in the command to which the response is supposed to correspond;
- verifying (804) that the metadata (MD_O) recovered in the response correspond to the descriptor (OP_DESC) of the operation to be performed, and, when such is not the case, rejecting the response;
- recovering (807), in the response received, and verifying that the second signature conforms to the output attributes (ATT_O) and the metadata (MD_O) associated with the response, which were recovered in the response, and, when such is not the case, rejecting the response, and otherwise accepting the response.

9. Method according to claim 8, wherein the verification of the response is also implemented by a data concentrator (120) acting as a relay between the management device (111) and the smart meter in question (151, 152, 153) in the automated management system (100).

10. Management device (111) comprising electronic circuitry configured to implement a transmission of a secure command in a system (100) for automated management of smart meters (151, 152, 153) where the management device (111) is configured to remotely manage the smart meters (151, 152, 153), the command comprising a descriptor (OP_DESC) of the operation to be performed by a said smart meter (151, 152, 153) and input attributes (ATT_I) of the operation to be performed and metadata (MD_I) associated with the command, the electronic circuitry being configured to perform the following steps:
- implementing a protection (502) that generates a first signature on a set of data formed by the input attributes (ATT_I) of the operation to be performed and the metadata (MD_I) associated with the command;
- transmitting (504), to the smart meter (151, 152, 153) in question, the command with the descriptor (OP_DESC) of the operation to be performed, the input attributes (ATT_I) of the operation to be performed, the metadata (MD_I) associated with the command and the first signature generated;
**characterised in that** the method furthermore comprises:
- including (501), in the metadata (MD_I) associated with the command, a copy of the descriptor (OP_DESC) of the operation to be performed, so that the first signature also applies to the copy of the descriptor (OP_DESC) of the operation to be performed in order to make it possible, on reception, to verify that the command has not been altered during transmission.

11. Smart meter (151, 152, 153) configured to process a command received from a management device (111) in an automated management system (100) where the management device (111) is configured to remotely manage the smart meter (151, 152, 153), the command comprising a descriptor (OP_DESC) of an operation to be performed by the smart meter and input attributes (ATT_I) of the operation to be performed and metadata (MD_I) associated with the command, **characterised in that** the smart meter (151, 152, 153) comprises electronic circuitry configured to perform the following steps, on reception (601) of the command, of verifying the command:
- recovering (602), in the command received, the descriptor (OP_DESC) of the operation to be performed;
- recovering (603), in the command received, the input attributes (ATT_I) to be applied as an input of the operation to be performed, as well as the associated metadata (MD_I);
- verifying (604) that the copy of the descriptor (OP_DESC) of the operation to be performed in the metadata recovered conforms to the descriptor (OP_DESC) of the operation to be performed recovered and, when such is not the case, rejecting the command;
- recovering (607), in the command received, and verifying that the first signature in the command conforms to the input attributes (ATT_I) to be applied as an input to the operation to be performed and to said metadata (MD_I), including the copy of the descriptor (OP_DESC) of the operation to be performed, which were recovered in the command, and, when such is not the case, rejecting the command, and otherwise accepting the command.

12. System (100) for automated management of smart meters comprising a management device (111) according to claim 10 and smart meters (151, 152, 153) according to claim 11.

13. Method implemented by a smart meter (151, 152, 153) in order to process a command received from a management device (111) in an automated management system (100) where the management device (111) is configured to remotely manage the smart meter (151, 152, 153), the command comprising a descriptor (OP_DESC) of an operation to be performed by said smart meter (151, 152, 153) and input attributes (ATT_I) of the operation to be performed and metadata (MD_I) associated with the command, **characterised in that** the method comprises the following steps, on reception (601) of the command, of verifying the command:
- recovering (602), in the command received, the descriptor (OP_DESC) of the operation to be performed;
- recovering (603), in the command received, the input attributes (ATT_I) to be applied as an input of the operation to be performed, as well as the metadata (MD_I) associated with the command;
- verifying (604) that the copy of the descriptor (OP_DESC) of the operation to be performed in the metadata (MD_I) recovered conforms to the descriptor (OP_DESC) of the operation to be performed recovered and, when such is not the case, rejecting the command;
- recovering (607), in the command received, and verifying that the first signature in the command conforms to the input attributes (ATT_I) to be applied as an input to the operation to be performed and to said metadata (MD_I), including the copy of the descriptor (OP_DESC) of the operation to be performed, which were recovered in the command, and, when such is not the case, rejecting the command, and otherwise accepting the command.

14. Computer program product comprising instructions causing an implementation, by a processor, of the method according to any one of claims 1 to 4 or of the method according to claim 13, when the instructions are executed by the processor.

15. Information-storage medium storing instructions causing an implementation, by a processor, of the method according to any one of claims 1 to 4 or of the method according to claim 13, when the instructions are read from the information-storage medium and executed by the processor.
